# EUROPEAN PATENT APPLICATION

(11) **EP 1 995 954 A2**
(43) Date of publication of application: **26.11.2008**
(21) Application number: 08009572.2
(22) Date of filing: 26.05.2008
(51) Int. Cl.: H04N 5/44, H04N 5/445

(54) **Digital broadcasting receiving apparatus**

(30) Priority: 25.05.2007 JP 2007139766
(71) Applicant: Funai Electric Co., Ltd., Osaka 574-0013 (JP)
(72) Inventor: Tokoshima, Susumu, Daito-shi, Osaka 574-0013 (JP); Noda, Yutaka, Daito-shi, Osaka 574-0013 (JP)
(74) Representative: Grünecker, Kinkeldey, Stockmair & Schwanhäusser Anwaltssozietät

(57) **Abstract**

When an instruction for selecting the channel of digital broadcasting in order of number is inputted, if the broadcasting style of a candidate channel scheduled to be selected next is not TV broadcasting or radio broadcasting, or the broadcasting style of the candidate channel is TV broadcasting or radio broadcasting while at least one of video stream and audio stream is detected as the stream type of a current program of the candidate channel, the candidate channel is selected. If the broadcasting style of the candidate channel is TV broadcasting or radio broadcasting while the stream type of a current program of the candidate channel is not detected, or if only data stream is detected as the stream type, selection of the candidate channel is skipped and the candidate channel is changed to a next channel.

## Description

### BACKGROUND OF THE INVENTION

### 1. Field of the Invention

The present invention relates to a digital broadcasting receiving apparatus for selecting a channel in order of the number.

### 2. Description of the Related Art

Upon changing the channel in the digital broadcasting receiving apparatus, a channel key for specifying only one channel to be selected or a channel up/down key (channel up key or channel down key) for instructing channel selection in ascending order or descending order is operated. Hereinafter, the change of the channel refers to changing of a video signal or an audio signal to be outputted to a display, a speaker, or the like from a certain channel to another channel. The selection of the channel refers to receiving of broadcasting signal of a certain channel, detecting video, audio, or data broadcast through a channel from the broadcasting signal, and outputting a video signal or audio signal for displaying these to a display, a speaker, or the like.

Generally, digital broadcasting includes more channels than analog broadcasting. For this reason, if the channel up/down key is used for changing the channel to a desired channel of digital broadcasting in the digital broadcasting receiving apparatus, a channel in which no program is broadcast is also selected, thereby taking time for changing to the desired channel.

On the other hand, in order to accelerate the changing to a desired channel, in the digital broadcasting receiving apparatus described in Japanese Unexamined Patent Application Publication No.2001-177778, information about each channel (broadcasting execution, stop, or the like) is extracted from TS (Transport Stream) of each channel of digital broadcasting at a certain time interval and written into a predetermined table. Then, when a channel up or down signal is received, the aforementioned table is referred to and if a channel scheduled to be selected next falls under a certain condition (for example, being broadcast), the channel is selected, and if the channel does not fall under the certain condition (for example, suspension of broadcasting), selection of the channel is avoided.

The digital broadcasting receiving apparatus described in Japanese Unexamined Patent Application Publication No.2006-270776 receives a broadcasting signal of each channel of digital broadcasting, detects tag information from the broadcasting signal, and when determining that a channel corresponding to the tag information containing no broadcasting suspension information is being broadcast, stores the channel in a receivable channel list. Then, when selecting a channel in accordance with user's desire, only channels stored in the receivable channel list are selected to avoid selection of any unreceivable channel which is being broadcast for test although it is suspended.

Further, the digital broadcasting receiving apparatus described in Japanese Unexamined Patent Application Publication No.2003-348466 receives program arrangement information (PAT (Program Association Table) and PMT (Program Map Table) of a channel for a predetermined period, analyzes deficit occurrence conditions of the program arrangement information, determines whether or not the program arrangement information can been received based on a result of the analysis, and notifies user of whether or not a broadcasting program of a certain channel is present based on a result of the determination.

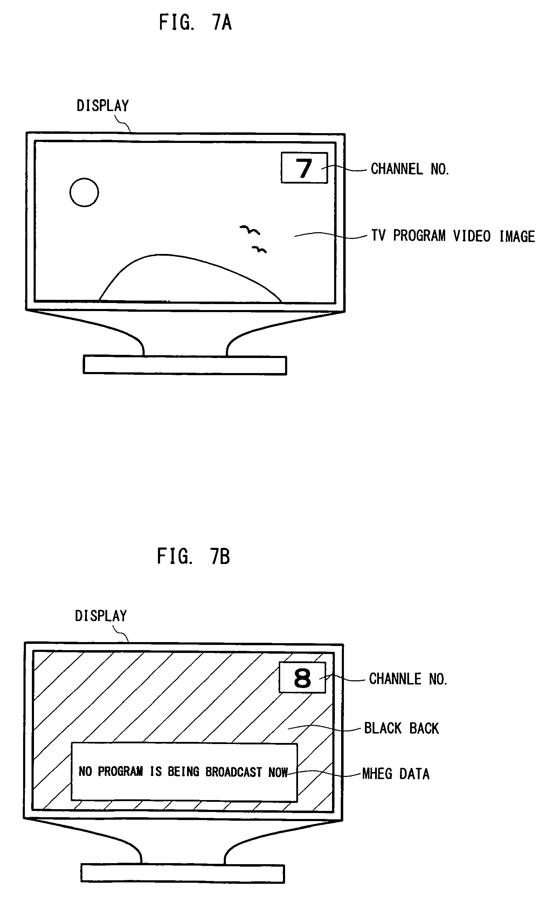

According to the above-described Japanese Unexamined Patent Application Publication No.2001-177778 and Japanese Unexamined Patent Application Publication No.2006-270776, although broadcasting suspension information of each channel is detected from a broadcasting signal, it is not considered whether or not broadcasting of a program of each channel is present. According to the Japanese Unexamined Patent Application Publication No.2003-348466, although the program arrangement information of each channel is detected, whether or not broadcasting of a regular program of each channel is present is not considered. On the other hand, for example, in digital TV broadcasting in Britain, MHEG (Multimedia and Hypermedia information coding Experts Group) data broadcasting which notifies that no program is being broadcast is executed through a channel for TV broadcasting which broadcasts TV program not all day (24 hours) when broadcasting of a TV program is suspended, and the program arrangement information (PAT and PMT) of the channel is transmitted. In this case, when the channel is selected in order, according to the Japanese Unexamined Patent Application Publication No.2001-177778 and Japanese Unexamined Patent Application Publication No.2006-270776, it is determined that the aforementioned channel is being broadcast although a TV program usually broadcast through the same channel cannot be watched. And according to Japanese Unexamined Patent Application Publication No. 2003-348466, it is determined that the aforementioned channel is being broadcast and the channel is selected. Thus, for example, in the case where a channel which is broadcasting a TV program is selected and a picture of the TV program is displayed on a display as shown in FIG. 7A, when the channel up key is operated, if a channel scheduled to be selected next is a channel for the TV broadcasting which is broadcasting the MHEG data notifying that no program is currently being broadcast, the channel is selected so that the video image by MHEG data is displayed on the display as shown in FIG. 7B, thereby much time being taken for changing the channel to a desired one in which a program is being broadcast.

### SUMMARY OF THE INVENTION

The present invention is achieved to solve the above-described problems and an object of the invention is to provide a digital broadcasting receiving apparatus capable of rapidly changing the channel to a desired one through which a program is being broadcast upon selecting channel in order.

In the present invention, in a digital broadcasting receiving apparatus comprising: a channel selecting means for selecting each channel of digital broadcasting and receiving a broadcasting signal of each channel; a channel selection instruction means for inputting an instruction for selecting the channels in order of the number; a detecting means for processing the broadcasting signal to detect video stream, audio stream, data stream, and attached information; and an output means for processing the video stream, the audio stream, and the data stream to output a video signal and an audio signal, a following operation is performed. The detecting means detects a broadcasting style of each channel and a stream type of a current program of each channel from the attached information. When the instruction is inputted by the channel selection instruction means, if the broadcasting style of a candidate channel which is scheduled to be selected next is not TV broadcasting or radio broadcasting, or the broadcasting style of the candidate channel is TV broadcasting or radio broadcasting while at least one of the video stream and the audio stream is detected as the stream type of a current program of the candidate channel, the channel selecting means selects the candidate channel. If the broadcasting style of the candidate channel is TV broadcasting or radio broadcasting while no stream type of a current program of the candidate channel is detected, or only the data stream is detected as the stream type, the channel selecting means does not select the candidate channel but changes the candidate channel to a next channel.

According to the above manner, at the time of selecting a channel of the digital broadcasting in order, a channel whose broadcasting style is data broadcasting and a channel whose broadcasting style is TV broadcasting or radio broadcasting while TV program or radio program is being broadcast are selected, and a channel whose broadcasting style is TV broadcasting or radio broadcasting while neither TV program nor radio program is being broadcast is skipped. As a result, the channel can be rapidly changed to a desired channel through which a program is being broadcast.

In the present invention, in the aforementioned digital broadcasting receiving apparatus, the detecting means may detect the broadcasting style of each channel from the attached information in advance and store the broadcasting style information in a memory means in correspondence with each channel.

According to this manner, before selecting a channel of the digital broadcasting in order, information indicating the broadcasting style of each channel can be accurately detected and stored in the memory means. Further, at the time of selecting a channel in order, the broadcasting style of a candidate channel can be accurately determined based on the broadcasting style information stored by the memory means. Moreover, because the process for detecting the broadcasting style of the candidate channel from the attached information of the received broadcasting signal can be omitted, time taken for selecting a channel in order can be reduced. Consequently, it is possible to change the channel to a desired one through which a program is being broadcast more rapidly.

In the present invention, in the aforementioned digital broadcasting receiving apparatus, when the instruction for selecting the channels is inputted, the detecting means may detect the stream type of a current program of the candidate channel from the attached information corresponding to the candidate channel.

According to this manner, at the time of selecting a channel of the digital broadcasting in order, the stream type of a current program of the candidate channel can be accurately detected to accurately determine whether or not broadcasting of a TV program or a radio program of the candidate channel is present.

According to the present invention, rapid change to a desired channel through which a program is being broadcast can be performed at the time of selecting a channel of the digital broadcasting in order.

### BRIEF DESCRIPTION OF THE DRAWINGS

FIG. 1 is a block diagram of a digital broadcasting receiving apparatus;
FIG. 2 is a flow chart showing the procedure of detection and storage of channel broadcasting style;
FIG. 3 is a diagram showing channel broadcasting style information;
FIG. 4 is a flow chart showing the procedure of the channel selection processing;
FIG. 5 is a diagram showing an example of channel selection;
FIG. 6 is a flow chart showing another embodiment; and
FIG. 7 is a diagram showing a conventional example of picture displayed at the time of channel selection.

### DESCRIPTION OF THE PREFERRED EMBODIMENTS

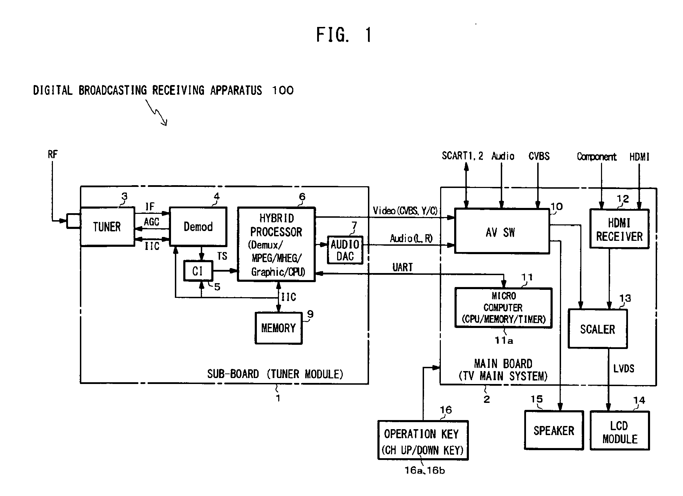

FIG. 1 is a block diagram of a digital broadcasting receiving apparatus 100 according to an embodiment of the present invention. The digital broadcasting receiving apparatus 100 is constituted of a TV receiver which receives a broadcasting signal of each channel of digital broadcasting based on DVB SI (Digital Video Broadcasting Service Information) so as to display a video image of the program being broadcast through each channel and output sound. A tuner module is mounted on a sub-board 1 of the digital broadcasting receiving apparatus 100. A main system of TV (television) is mounted on a main board 2.

A tuner 3 extracts an IF (Intermediate Frequency) signal corresponding to each channel from an RF (Radio Frequency) signal of digital broadcasting acquired through an antenna (not shown) and outputs the signal to a demodulator 4. The demodulator 4 demodulates the digital IF signal of each channel, detects a TS (Transport Stream), and outputs the TS to a hybrid processor (hereinafter referred to as processor) 6 through a CI (Common Interface) 5. The demodulator 4 outputs an AGC signal for selecting each channel to the tuner 3. The tuner 3 and the demodulator 4 carry out data communication between them through IIC (Inter Integrated Circuit) bus. An IC card (not shown) incorporating a descrambler is connected to the CI 5. The TS scrambled in pay digital broadcasting or the like is descrambled by the descrambler of the IC card through the CI 5.

The processor 6 includes a de-multiplexer (Demux), an MPEG (Moving Picture Experts Group) decoder, an MHEG (Multimedia and Hypermedia information coding Experts Group) decoder, a graphic controller (Graphic) and a CPU. The processor 6 detects MPEG-2 type video stream, audio stream, MHEG data stream and PSI (Program Specific Information) / SI (Service Information) from the TS by means of the de-multiplexer. The PSI/SI is attached information of program contained in the broadcasting signal of each channel of the digital broadcasting. The processor 6 decodes the video stream or the MHEG data stream by means of the MPEG decoder or the MHEG decoder so as to generate video data. Further, the processor 6 executes various kinds of image processing on the video data by means of the graphic controller so as to output a video signal to the AV SW (switch) 10 (Video (CVBS, Y/C)). Moreover, the processor 6 decodes audio stream by means of the MPEG decoder so as to generate audio data, and outputs the data to an audio DAC (digital analog converter) 7. The audio DAC 7 converts audio data to audio signal and outputs the signal to the AV SW 10 (Audio (L, R)).

A memory 9 is constituted of EEPROM, NOR FLASH, SDRAM and the like. The memory 9 stores data for processing the TS in the processor 6 and data for controlling an IC card in which the CPU of the processor 6 is connected to the tuner 3, the demodulator 4, and the CI 5 preliminarily or as required. The CPU of the processor 6 reads and writes data from/to the memory 9. Additionally, the CPU of the processor 6 carries out data communication with the IC card connected to the demodulator 4 or the CI 5 through an IIC bus.

A microcomputer 11 provided on the main board 2 is constituted of a CPU, a memory 11a and a timer. The microcomputer 11 controls each portion of the digital broadcasting receiving apparatus 100. Further, the microcomputer 11 measures date and time by means of the timer. Moreover, the microcomputer 11 selects each channel of the digital broadcasting by means of the tuner 3 and the demodulator 4, and receives broadcasting signal (IF signal) of each channel.

The processor 6 carries out data communication through UART (Universal Asynchronous Receiver Transmitter) with the microcomputer 11. The CPU of the microprocessor 6 transmits such information as PSI/SI to the microcomputer 11. The microcomputer 11 detects an NIT (Network Information Table) from the SI and detects a PMT (Program Map Table) corresponding to each channel from the PSI. The NIT indicates service configuration of entire network and contains information (service type in service list descriptor) indicating the broadcasting style (TV broadcasting, radio broadcasting, data broadcasting) of each channel of digital broadcasting. The PMT, indicating a PID (Packet ID) of the TS packet which transmits each coded signal which constitutes a program, is provided in each channel, and contains information (stream type) indicating stream type (video stream, audio stream, data stream) of a current program of each channel. The microcomputer 11 detects a broadcasting style of each channel from NIT and detects a stream type of a current program of each channel from the PMT.

The microcomputer 11 sends various kinds of information to the processor 6. The processor 6 generates video data based on the various kinds of information sent from the microcomputer 11 by means of a graphic controller, and carries out OSD (On-Screen Display) processing for building the video data into the video data generated by the MPEG decoder or the like. With this OSD processing, an EPG (Electronic Program Guide) screen, menu screen and various kinds of setting screens can be displayed.

Input signals to the AV SW 10 are not only each video signal and each audio signal from the tuner 3, the processor 6 and the audio DAC 7, but also a video signal (CVBS) and an audio signal from an external video device (not shown) connected to the digital broadcasting receiving apparatus 100 through a cable or the like. Input/output of the video signal and the audio signal are carried out between the digital broadcasting receiving apparatus 100 and the external video device through the AV SW 10 and the SCART (Syndicat des Constructeurs d'Appareils Radiorecepteurs et Televiseurs) 1, 2 interface. The AV SW 10 switches over an audio signal to be outputted to the speaker 15 and a video signal to be outputted to a scaler 13.

A HDMI (High-Definition Multimedia Interface) receiver 12 receives a component signal or HDMI signal inputted from the external video device and outputs the signal to the scaler 13. The scaler 13 executes image processing such as image size conversion and image quality adjustment onto a video signal inputted from the AV SW 10 or the HDMI receiver 12, then converts the video signal to an LVDS (Low Voltage Differential Signaling) signal, and outputs the signal to a LCD (Liquid Crystal Display) 14.

The LCD module 14 displays a video image based on an inputted LVDS signal. The speaker 15 outputs a sound based on an inputted audio signal. Operation keys 16 are provided on an operation panel arranged on the front face of the body of the digital broadcasting receiving apparatus 100 and on a remote controller, respectively. Various types of the operation keys 16 are provided, for example, a channel up key 16a and a channel down key 16b. The channel up key 16a is operated to input an instruction for selecting each channel number in an ascending order. The channel down key 16b is operated to input an instruction for selecting each channel number in a descending order.

In the above described configuration, the tuner 3, the demodulator 4 and the microcomputer 11 constitute one embodiment of a channel selecting means of the present invention. The demodulator 4, the processor 6 and the microcomputer 11 constitute one embodiment of a detecting means of the present invention. The processor 6 and the audio DAC 7 constitute one embodiment of an output means of the present invention. The LCD module 14 constitutes one embodiment of a video display means of the present invention. The speaker 15 constitutes one embodiment of an audio output means of the present invention. The channel up/down keys 16a, 16b constitute one embodiment of a channel selecting means of the present invention.

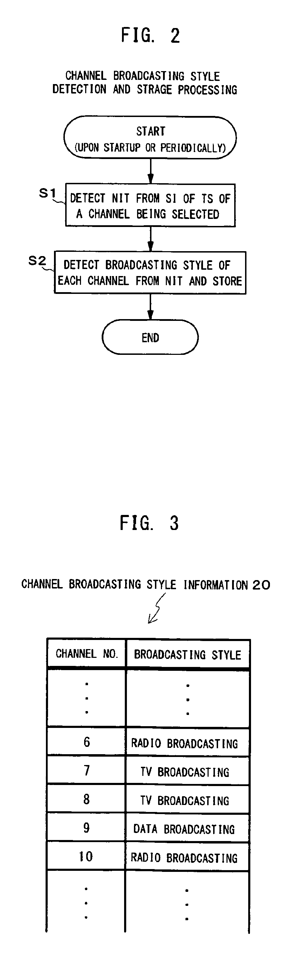

FIG. 2 is a flow chart showing the procedure of detection and storage of channel broadcasting style. This processing is executed while microcomputer 11 controls respective portions of the digital broadcasting receiving apparatus 100. The microcomputer 11 detects NIT from the SI of TS detected from a broadcasting signal of a channel being selected at the starting time of the digital broadcasting receiving apparatus 100 or periodically (step S1). The "starting time" of the digital broadcasting receiving apparatus 100 refers to a time when a power switch is turned ON so as to start up the respective portions. "Periodically" means each time when a preset period is elapsed. Although a start timing of step S1 is preliminarily set at manufacturing stage of the digital broadcasting receiving apparatus 100 (initial timing), user can set and change it freely by operating the operation key 16 in accordance with various kinds of setting screens displayed on the LCD module 14. The channel being selected means an initial channel of digital broadcasting set preliminarily, a channel of digital broadcasting selected until just before the power is turned OFF, a channel of digital broadcasting selected by user operation of the operation key 16, or the like. When NIT is detected, the microcomputer 11 detects a broadcasting style of each channel from the NIT, stores the broadcasting style information in the memory 16a in correspondence with each channel (step S2), and terminates the processing.

When detection and storage of the channel broadcasting style is ended as described above, for example, channel broadcasting style information 20 is stored in a memory 11a as shown in FIG. 3. The channel broadcasting style information 20 indicates, for example, which broadcasting style among all channels of the digital broadcasting is TV broadcasting, radio broadcasting, or data broadcasting. For example, it indicates that channel 7 and channel 8 are TV broadcasting channels, channel 6 and channel 10 are radio broadcasting channels, and channel 9 is data broadcasting channel. By executing detection and storage of the channel broadcasting style repeatedly, the channel broadcasting style information 20 is updated to the latest information. Further, because the broadcasting style of each channel is hardly changed once it is specified, when detection and storage of the channel broadcasting style is executed periodically, accuracy of the channel broadcasting style information 20 can be held even if the predetermined period is set to, for example, a long period such as half a year or a year.

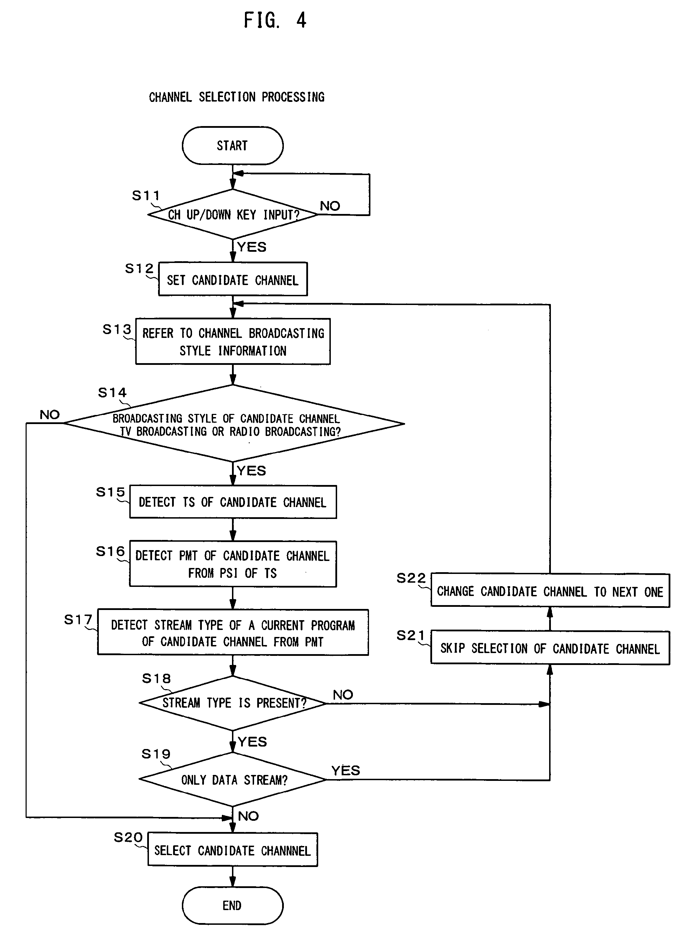

FIG. 4 is a flow chart showing the procedure of the channel selection processing. This processing is executed while microcomputer 11 controls respective portions of the digital broadcasting receiving apparatus 100. If an input to the channel up key 16a or channel down key 16b is executed by user operation after the digital broadcasting receiving apparatus 100 is started (step S11: YES), the microcomputer 11 determines that an instruction for selecting a channel of digital broadcasting in ascending order or descending order is given. Then, the microcomputer 11 sets up a candidate channel which is scheduled to be selected next (step S12). At this time, the microcomputer 11 sets up a channel scheduled to be selected in order of numbers next to a channel selected when a channel selection instruction was inputted by the channel up/down key 16a, 16b as a candidate channel. That is, a channel having a next larger number or a channel having a next smaller number is set as the candidate channel.

Next, the microcomputer 11 refers to the channel broadcasting style information 20 stored in the memory 11a (step S13) and then, determines whether or not the broadcasting style of the candidate channel is TV broadcasting or radio broadcasting (step S14). The microcomputer 11, if the broadcasting style of the candidate channel is data broadcasting (step S14: NO), selects a candidate channel (step S20), and terminates the processing. Consequently, the broadcasting signal of the candidate channel is received by the tuner 3, the TS is detected from the broadcasting signal by the demodulator 4, the MHEG data stream is detected from the TS by the processor 6, a video signal based on the MHEG data stream is outputted, the video signal is inputted to the LCD module 14 through the AV SW10 and the scaler 13, and a video image of the data broadcasting of the candidate channel is displayed on the LCD module 14.

On the other hand, if the broadcasting style of the candidate channel is TV broadcasting or radio broadcasting (step S14: YES), the microcomputer 11 detects the TS from a broadcasting signal of the candidate channel (step S15), detects the PMT of the candidate channel from the PSI of the TS (step S16) and further, detects a stream type of a current program of the candidate channel from the PMT (step S17).

If the stream type cannot be detected because no information of the stream type of a current program exists in the PMT of the candidate channel (step S18: NO), or if the microcomputer 11 detects the stream type of a current program from the PMT of the candidate channel (step S18: YES) and the stream type is only.data stream (step S19: YES), the microcomputer 11 determines that no TV program or radio program is broadcast currently through the candidate channel. Then, the microcomputer 11 skips selection of the candidate channel (step S21) and changes the candidate channel to a next channel (step S22). That is, without selecting the candidate channel set in step S12, a channel scheduled to be selected in the order of number next to the candidate channel (a channel having a large number or a small number next to the number of the skipped channel) is set newly as a candidate channel. After that, the microcomputer 11 refers to the channel broadcasting style information 20 (step S13), determines whether or not the broadcasting style of the candidate channel changed in step S22 is TV broadcasting or radio broadcasting (step S14), and executes the steps subsequent to step S15 in accordance with the determination result. Consequently, detection of video stream or audio stream from the TS of the candidate channel at the processor 6, output of video signal or audio signal at the processor 6 or the audio DAC 7, display of unnecessary video images of the candidate channel at the LCD module 14, and output of unnecessary sound of the candidate channel from the speaker 15 are cancelled. If the stream type of a current program cannot be detected from the PMT of the candidate channel (step S18: NO), the unnecessary video image of the candidate channel is a ghost image or the like and the unnecessary sound is a noise or the like. If the stream type of the current program detected from the PMT of the candidate channel is only data stream (step S19: YES), the unnecessary video image of the candidate channel is the MHEG data image notifying that no program is being broadcast.

On the other hand, if at least one of the video stream and audio stream is contained in the stream type of the current program detected from the PMT of the candidate channel (step S19: NO), the microcomputer 11 determines that a TV program or radio program is being broadcast currently through the candidate channel. Then, the microcomputer 11 selects a candidate channel (step S20) and terminates the processing. Consequently, detection of the video stream or audio stream from the TS of the candidate channel at the processor 6, output of the video signal or audio signal at the processor 6 or the audio DAC 7, display of video image of TV program of the candidate channel at the LCD module 14, and output of sound of a TV program or radio program of the candidate channel from the speaker 15 are carried out appropriately.

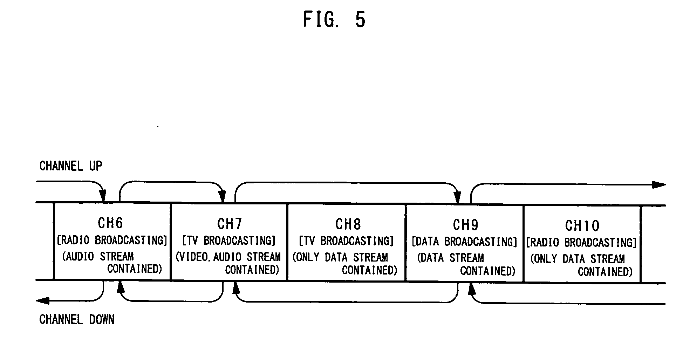

According to the above mentioned channel selection processing, for example, as shown with an arrow in FIG. 5, channels 6-10 of digital broadcasting are selected in order. That is, in FIG. 5, channel 6 whose broadcasting style is radio broadcasting contains audio stream as stream type, channel 7 whose broadcasting style is TV broadcasting contains video stream and audio stream as stream type, channel 8 whose broadcasting style is TV broadcasting contains only data stream as stream type, channel 9 whose broadcasting style is data broadcasting contains data stream as stream type, and channel 10 whose broadcasting style is radio broadcasting contains only data stream as stream type. In this case, if an ascending order channel selection instruction is inputted by the channel up key 16a, channel 7 is selected next to channel 6 and then, selection of channel 8 is skipped and then, channel 9 is selected and then selection of channel 10 is skipped. If a descending order channel selection instruction is inputted by the channel down key 16b, selection of channel 10 is skipped and channel 9 is selected, then selection of channel 8 is skipped while channel 7 is selected and then, channel 6 is selected.

According to the above embodiment, when selecting a channel of digital broadcasting in order, a channel whose broadcasting style is data broadcasting and a channel whose broadcasting style is TV broadcasting or radio broadcasting while TV program or radio program is being broadcast are selected, and selection of a channel whose broadcasting style is TV broadcasting or radio broadcasting while neither TV program nor radio program is being broadcast is skipped. Consequently, changing to a desired channel through which a program is being broadcast can be carried out rapidly.

A video image (video image of a TV program as shown in FIG. 7A) of a channel through which a program is being broadcast is displayed on the LCD module 14 while an unnecessary video image (ghost image or MHEG data image notifying that no program is being broadcast as shown in FIG. 7B) of a channel through which no program is being broadcast is not displayed on the LCD module 14, and no unnecessary sound (noise or the like) of the channel is outputted, thereby preventing user from feeling unpleasant or annoying when watching or listening to the unnecessary video image or sound.

Further, before the channel selection of the digital broadcasting, the channel broadcasting style information 20 indicating the broadcasting style of each channel can be accurately detected from the NIT of the SI of the detected TS and stored in the memory 11a. Particularly, by carrying out detection and storage of the channel broadcasting style of FIG. 2 upon startup or periodically, the channel broadcasting style information 20 can be updated and held accurately even if the broadcasting style of each channel is changed. In addition, at a time of the channel selection of the digital broadcasting, the broadcasting style of a candidate channel can be accurately determined based on the channel broadcasting style information 20. Further, since detection and storage of the channel broadcasting style is executed at the time of startup and not executed during a subsequent operation, the process taken for detection and storage of the channel broadcasting style information 20 during the subsequent operation can be omitted. Moreover, by prolonging a period in which detection and storage of the channel broadcasting style is carried out periodically, the time and burden taken for that processing can be reduced.

Further, at a time of the channel selection of the digital broadcasting, the stream type of a current program of a candidate channel can be accurately detected from the PMT of the PSI of the detected TS, and whether or not a TV program or radio program of the candidate channel is present can be accurately determined.

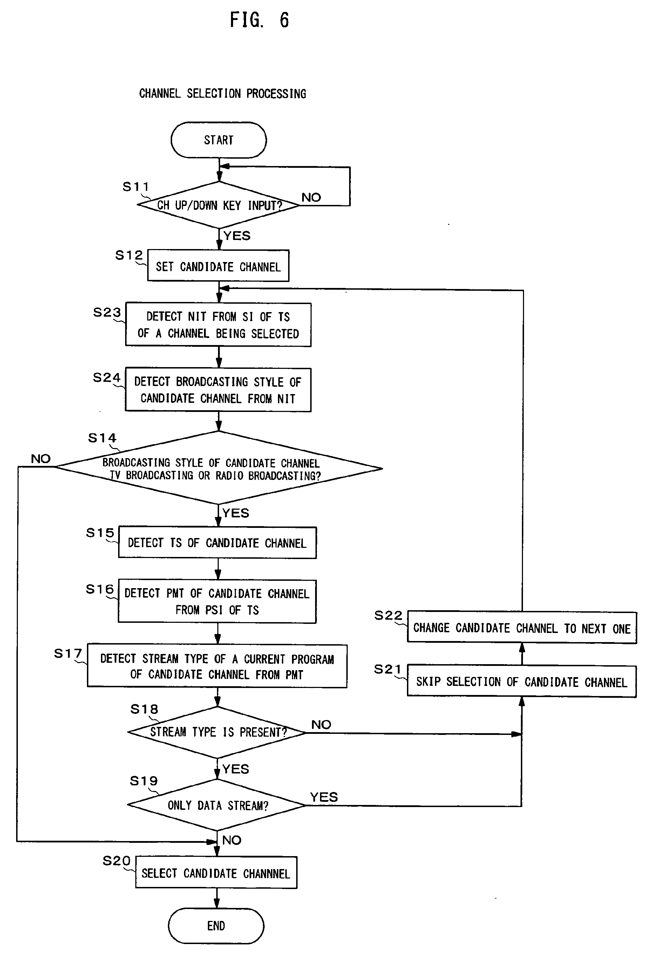

The present invention can employ various embodiments in addition to the above-described embodiments. For example, although the above embodiments indicate a case where detection and storage of the channel broadcasting style is carried out upon startup or periodically so as to record the broadcasting style of each channel and update it, the present invention is not limited thereto. Alternatively, it is permissible to omit detection and storage of the channel broadcasting style of FIG. 2 so that the broadcasting style of a candidate channel is detected in the process of channel selection as shown in FIG. 6. In FIG. 6, the same reference numerals are attached to the same steps as in FIG. 4. In FIG. 6, if an input to the channel up/down keys 16a, 16b is executed (step S11: YES) and a candidate channel is set up (step S12), the microcomputer 11 detects the NIT from the SI of the TS detected from the broadcasting signal of a channel being selected (step S23) and detects the broadcasting style of the candidate channel from the NIT (step S24). Then, the microcomputer 11 executes steps subsequent to step S14 as described previously. According to this, information indicating the broadcasting style of each channel does not need to be stored in the memory 11a of the microcomputer 11 in advance, so that cost of the microcomputer 11 can be suppressed low by reducing the storage capacity of the memory 11a or the storage area of the memory 11a can be used effectively for other processing. On the other hand, if detection and storage of the channel broadcasting style of FIG. 2 and the channel selection of FIG. 4 are executed, the process for detecting the broadcasting style of a candidate channel from the NIT of the SI of the TS can be omitted at the time of the channel selection. Therefore, it has the advantage that the time taken for the channel selection is reduced, and change to a desired channel through which a program is being broadcast can be performed more rapidly.

Although the above-described embodiments take an example that the present invention is applied to the digital broadcasting receiving apparatus 100 constituted of a TV receiver which receives digital broadcasting based on DVB SI standard and outputs video image and sound of a program of each channel, the present invention is not limited thereto. Additionally, the present invention can be applied to the digital broadcasting receiving apparatus which receives digital broadcasting based on at least DVB SI standard or other standard such as TV receiver, optical disc recorder, hard disc recorder, set top box or AV composite unit in which at least two units of these are integrated.

## Claims

1. A digital broadcasting receiving apparatus (100) comprising: a channel selecting means (3, 4, 11) for selecting each channel of digital broadcasting and receiving a broadcasting signal of each channel; a channel selection instruction means (16a, 16b) for inputting an instruction for selecting the channels in order of the number; a detecting means (4, 6, 11) for processing the broadcasting signal to detect video stream, audio stream, data stream and attached information; and an output means (6, 7) for processing the video stream, the audio stream, and the data stream to output a video signal and an audio signal, **characterized in that**
the detecting means (4, 6, 11) detects a broadcasting style of each channel and a stream type of a current program of each channel from the attached information,
when the instruction for selecting the channels is inputted by the channel selection instruction means (16a, 16b), if the broadcasting style of a candidate channel which is scheduled to be selected next is not TV broadcasting or radio broadcasting, or the broadcasting style of the candidate channel is TV broadcasting or radio broadcasting while at least one of the video stream and the audio stream is detected as the stream type of a current program of the candidate channel, the channel selecting means (3, 4, 11) selects the candidate channel, and
if the broadcasting style of the candidate channel is TV broadcasting or radio broadcasting while no stream type of a current program of the candidate channel is detected, or only the data stream is detected as the stream type, the channel selecting means (3, 4, 11) does not select the candidate channel but changes the candidate channel to a next channel.

2. The digital broadcasting receiving apparatus (100) according to claim 1, **characterized in that** the detecting means (4, 6, 11) detects the broadcasting style of each channel from the attached information in advance and stores the broadcasting style information in a memory means (9) in correspondence with each channel.

3. The digital broadcasting receiving apparatus (100) according to claim 1 or 2, **characterized in that** when the instruction for selecting the channels is inputted, the detecting means (4, 6, 11) detects the stream type of a current program of the candidate channel from the attached information corresponding to the candidate channel.
